# EUROPEAN PATENT SPECIFICATION

(11) **EP 4 015 325 B1**
(45) Date of publication and mention of the grant of the patent: **06.08.2025**
(21) Application number: 20882199.1
(22) Date of filing: 16.10.2020
(51) Int. Cl.: B60W 10/02, B60W 40/105, F16D 13/58, B60W 10/119, B60K 17/34, F16D 66/00, B60W 30/184, B60W 30/186

(54) **INTELLIGENT FOUR-WHEEL DRIVE CONTROL METHOD AND SYSTEM, AND VEHICLE, AND COMPUTER PROGRAM, AND COMPUTER-READABLE MEDIUM**
INTELLIGENTES VIERRADANTRIEBSSTEUERUNGSVERFAHREN UND -SYSTEM SOWIE FAHRZEUG SOWIE COMPUTERPROGRAMM SOWIE COMPUTERLESBARES MEDIUM
PROCÉDÉ ET SYSTÈME DE COMMANDE DE TRANSMISSION À QUATRE ROUES MOTRICES INTELLIGENTE, ET VÉHICULE, ET PROGRAMME INFORMATIQUE, ET SUPPORT LISIBLE PAR ORDINATEUR

(30) Priority: 31.10.2019 CN 201911053493
(43) Date of publication of application: 22.06.2022
(73) Proprietor: Great Wall Motor Company Limited, Baoding, Hebei 071000 (CN)
(72) Inventor: DENG, Fei, Baoding, Hebei 071000 (CN); LI, Hongchao, Baoding, Hebei 071000 (CN); NIU, Weilong, Baoding, Hebei 071000 (CN); YIN, Yun, Baoding, Hebei 071000 (CN)
(74) Representative: Klunker IP Patentanwälte PartG mbB
(86) International application number: PCT/CN2020/121387
(87) International publication number: WO 2021/082946

(56) References cited:
- EP-A2- 1 749 726
- WO-A2-2010/007271
- CN-A- 102 537 134
- CN-A- 102 933 415
- CN-A- 104 295 632
- CN-A- 106 062 426
- CN-A- 109 455 088
- JP-A- S61 157 439
- US-A- 5 839 084
- US-A1- 2003 150 685
- US-A1- 2011 166 760

## Description

This application claims priority to Chinese Patent Application No. 201911053493.4, titled "INTELLIGENT FOUR-WHEEL DRIVE CONTROL METHOD AND SYSTEM, AND VEHICLE", filed on October 31, 2019 with the China National Intellectual Property Administration.

### FIELD

The present invention relates to the field of vehicle technology, and in particular to a method and system for intelligent four-wheel drive control, and a vehicle.

### BACKGROUND

With a four-wheel drive system of a vehicle, engine power of the vehicle may be delivered, based on road conditions and vehicle conditions, to any wheel in demand, in order to maximize four-wheel adhesive force, and improve passability, maneuverability and acceleration performance of the vehicle. An intelligent four-wheel drive system can automatically adjust a four-wheel drive mode, so as to realize a four-wheel drive performance while ensuring good driving experience.

In a conventional intelligent four-wheel drive control system, it is usually necessary to monitor a temperature of a friction plate clutch to prevent the friction plate from being ablated and sintered, or prevent an early failure of the four-wheel drive system. In a conventional method for temperature monitoring, the temperature of oil where the friction plate is disposed is measured and monitored by using a temperature sensor, and the temperature of the friction plate is inferred.
US2011/166760 A1 discloses a clutch unit comprising a wet friction clutch for controllable transmission of a torque from an input element to an output element, oil for cooling the friction clutch, and an actuator for actuating the friction clutch.

However, in the conventional method for temperature monitoring, since the temperature of the monitored friction plate is inferred from the temperature of the oil, there are problems of monitoring lag and poor reliability. Due to the poor reliability of the friction plate temperature, there is no method of correcting an output torque based on the friction plate temperature.

### SUMMARY

In view of the above, an objective of the present invention is to provide a method and a system for intelligent four-wheel drive control, and a vehicle, in order to solve the problems of lag in monitoring a friction plate temperature, poor reliability of the friction plate temperature, and inability to correcting an output torque.

To achieve the objective, technical solutions of the present invention are provided according to the independent claims. Further embodiments are specified in the dependent claims.

According to the invention, a method for intelligent four-wheel drive control is provided, including:
acquiring vehicle condition information of a vehicle, where the vehicle condition information includes a front wheel speed and a rear wheel speed of the vehicle;
calculating a calculated output torque based on the vehicle condition information;
calculating a temperature of a friction plate of the vehicle based on the front wheel speed, the rear wheel speed and the calculated output torque;
correcting the calculated output torque based on the temperature of the friction plate, to obtain an actual output torque; and
controlling a friction clutch to output the actual output torque.

Further according to the invention, the step of calculating a temperature of the friction plate of the vehicle based on the front wheel speed, the rear wheel speed and the calculated output torque includes:
calculating a front-rear shaft speed difference based on the front wheel speed and the rear wheel speed; and
calculating the temperature of the friction plate of the vehicle based on the front-rear shaft speed difference and the calculated output torque.

Further according to the invention, the step of calculating the temperature of the friction plate of the vehicle based on the front-rear shaft speed difference and the calculated output torque includes:

calculating a friction plate heat generation of the vehicle based on the front-rear shaft speed difference and the calculated output torque;
acquiring a historical temperature of oil where the friction plate is disposed;
calculating a friction plate heat dissipation based on the historical temperature; and
calculating the temperature of the friction plate based on the friction plate heat generation and the friction plate heat dissipation.

In a further embodiment, the vehicle condition information further includes vehicle speed and ambient temperature, and after the step of calculating the temperature of the friction plate based on the friction plate heat generation and the friction plate heat dissipation, the method further includes:
calculating a current oil temperature of the oil where the friction plate is disposed based on the friction plate heat dissipation, the vehicle speed and the ambient temperature; and
transmitting an overheat protection signal to the vehicle when the temperature of the friction plate meets a first preset condition and /or when the current oil temperature meets a second preset condition.

In a further embodiment, the step of correcting the calculated output torque based on the temperature of the friction plate, to obtain an actual output torque includes:
calculating a temperature correction coefficient based on the temperature of the friction plate;
obtaining a temperature-compensated output torque based on the calculated output torque and the temperature correction coefficient;
calculating a drag torque based on the front-rear shaft speed difference; and
obtaining the actual output torque based on the drag torque and the temperature-compensated output torque.

Advantages of the method for intelligent four-wheel drive control in the present invention in comparison with the conventional technology are described as follows.

In the method for intelligent four-wheel drive control according to the present invention, a calculated output torque is calculated for a vehicle based on acquired vehicle condition information of the vehicle; then a temperature of the friction plate of the vehicle is calculated based on a front wheel speed, a rear wheel speed and the calculated output torque; and an actual output torque is obtained by correcting the calculated output torque based on the temperature of the friction plate, and a friction clutch of the vehicle is controlled to output the actual output torque. In the method for intelligent four-wheel drive control according to the present invention, the temperature of the friction plate is directly obtained based on real-time vehicle condition information, and thereby has higher accuracy; in addition, the calculated output torque is corrected by using the temperature of the friction plate, which improves control accuracy for the output torque, thereby improving maneuverability of the vehicle and an ability of the vehicle to get out of trouble, and reducing probability of ablation damage to the friction plate.

Another objective of the present invention is to provide a system for intelligent four-wheel drive control, in order to solve the problems of lag in monitoring a friction plate temperature, poor reliability of the friction plate temperature, and inability to correcting an output torque.

To achieve the objective, technical solutions of the present invention are provided as follows.

According to the invention, a system for intelligent four-wheel drive control is provided, including an acquisition module, a torque calculation module, a temperature calculation module and a torque control module.

The acquisition module is connected to the torque calculation module and the temperature calculation module, and the torque calculation module is connected to the temperature calculation module and the torque control module.

The acquisition module is configured to acquire vehicle condition information of a vehicle, where the vehicle condition information includes a front wheel speed and a rear wheel speed.

The torque calculation module is configured to calculate a calculated output torque based on the vehicle condition information.

The temperature calculation module is configured to calculate a temperature of a friction plate of the vehicle based on the front wheel speed, the rear wheel speed and the calculated output torque.

The torque calculation module is further configured to correct the calculated output torque based on the temperature of the friction plate to obtain an actual output torque.

The torque control module is configured to control a friction clutch to output the actual output torque.

Further according to the invention, the temperature calculation module is specifically configured to:
calculate a front-rear shaft speed difference based on the front wheel speed and the rear wheel speed, and calculate a friction plate heat generation of the vehicle based on the front-rear shaft speed difference and the calculated output torque; and
acquire a historical temperature of oil where the friction plate is disposed, calculate a friction plate heat dissipation based on the historical temperature, and calculate the temperature of the friction plate based on the friction plate heat generation and the friction plate heat dissipation.

In a further embodiment, the vehicle condition information further includes vehicle speed and ambient temperature, and the system further includes an overheat protection module.

The overheat protection module is connected to the temperature calculation module/

The temperature calculation module is further configured to calculate, based on the friction plate heat dissipation, the vehicle speed and ambient temperature, a current oil temperature of the oil where the friction plate is disposed.

The overheat protection module is configured to transmit an overheat protection signal to the vehicle when the temperature of the friction plate meets a first preset condition and /or when the current oil temperature meets a second preset condition.

In a further embodiment, the torque calculation module is further configured to:
calculate a temperature correction coefficient based on the temperature of the friction plate; obtain a temperature-compensated output torque based on the calculated output torque and the temperature correction coefficient; calculate a drag torque based on the front-rear shaft speed difference; and obtain the actual output torque based on the drag torque and the temperature-compensated output torque.

Advantageous of the system for intelligent four-wheel drive control over the conventional technology are the same as those of the method for intelligent four-wheel drive control, which are not repeated herein.

Another objective of the present invention is to provide a vehicle, in order to solve the problems of lag in monitoring a friction plate temperature, poor reliability of the friction plate temperature, and inability to correcting an output torque.

To achieve the objective, a technical solution of the present invention is provided as follows.

According to the invention, a vehicle is provided, including the above-mentioned system for intelligent four-wheel drive control.

Advantageous of the vehicle over the conventional technology, are the same as those of the system for intelligent four-wheel drive control, which are not repeated herein. According to the invention, a computer program is provided, comprising computer readable codes, which, when being executed on a computing device, cause the computing device to perform the above-mentioned method for intelligent four-wheel drive control.

According to the invention, a computer-readable medium is provided, storing the above-mentioned computer program.

The technical solutions of the present application are briefly described above. For understanding the technical means of the present invention better and practicing the present invention, and for better understanding of the above and other objectives, features and advantages of the present invention, specific embodiments of the present invention are described below.

### BRIEF DESCRIPTION OF THE DRAWINGS

For a clearer illustration of the embodiments of the present invention or the technical solutions in the conventional technology, accompanying drawings required in the description of the embodiments or the conventional technology are introduced briefly below. Apparently, the drawings constituting a part of the present invention are intended to provide a further understanding of the present invention. Exemplary embodiments of the present invention and descriptions thereof are intended to explain the present invention, and do not constitute an undue limitation to the present invention. In the drawings:
Figure 1 is a flow chart of a method for intelligent four-wheel drive control according to an embodiment of the present invention;
Figure 2 is a flow chart of a method for intelligent four-wheel drive control according to another embodiment of the present invention;
Figure 3 is a structural block diagram of a system for intelligent four-wheel drive control according to an embodiment of the present invention;
Figure 4 is a schematic diagram of a control process of a system for intelligent four-wheel drive control according to an embodiment of the present invention;
Figure 5 is a schematic diagram of a calculation model for calculating a friction plate temperature, included in a temperature calculation module, according to an embodiment of the present invention;
Figure 6 is a schematic diagram of a calculation model in a torque calculation module according to an embodiment of the present invention;
Figure 7 is a schematic diagram of a calculation model for calculating a current oil temperature, included in a temperature calculation module, according to an embodiment of the present invention;
Figure 8 is a schematic diagram of a calculation model in an overheat protection module according to an embodiment of the present invention;
Figure 9 is a schematic block diagram of a computing device configured to perform the method according to the present invention; and
Figure 10 is a schematic diagram of a storage unit for storing or carrying program codes for implementing the method according to an embodiment of the present invention.

Reference numbers in the drawings are listed as follows.
301: Acquisition module
3011: Vehicle condition information
302: Torque calculation module
3021: Calculated output torque
3022: Drag torque
3023: Temperature-compensated output torque
3024: Actual output torque
303: Temperature calculation module
3031: Front-rear shaft speed difference
3032: Friction plate heat generation
3033: Friction plate heat dissipation
3034: Temperature of the friction plate
3035: Oil-absorbed temperature
3036: Oil heat dissipation
3037: Current oil temperature
304: Torque control module
305: Overheat protection module

### DETAILED DESCRIPTION

It should be noted that, the embodiments of the present invention and features in the embodiments may be combined with each other as long as there is no conflict.

The present invention is described in detail below with reference to the accompanying drawings and in conjunction with the embodiments.

### Embodiment 1

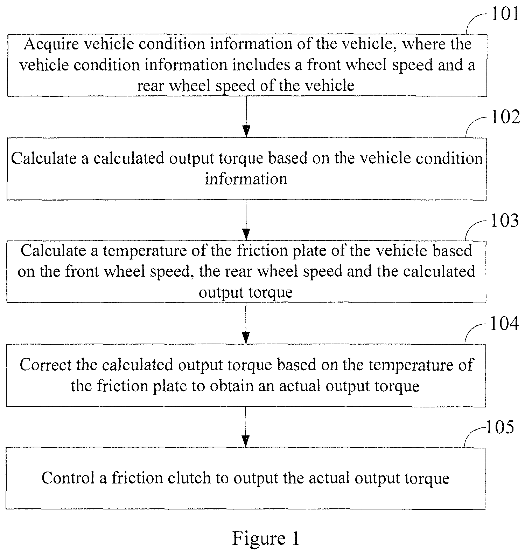

Figure 1 is a flow chart of a method for intelligent four-wheel drive control according to an embodiment of the present invention.

The method for intelligent four-wheel drive control provided in the embodiment of the present invention is applicable to a vehicle. The method may include steps 101 to 105.

In step 101, vehicle condition information of a vehicle is acquired, where the vehicle condition information includes a front wheel speed and a rear wheel speed of the vehicle.

The method for intelligent four-wheel drive control provided in the embodiments of the present invention is mainly applied to an intelligent four-wheel drive system of a vehicle. The intelligent four-wheel drive system includes an electronic control unit and an electronically controlled torque manager. The electronically controlled torque manager includes a group of friction clutches. The electronically controlled torque manager may control a torque transmitted from a friction clutch in real time in response to an electronic control signal sent from the electronic control unit. The electronic control unit includes multiple modules for automatically controlling the four-wheel drive system based on different road conditions and vehicle condition information, so as to not only ensure passability, maneuverability, and acceleration performance of the vehicle, but also eliminate phenomena such as steering braking and vibration, realizing a balance between driving experience and four-wheel drive performance.

Specifically in an embodiment of the present invention, the vehicle condition information includes real-time condition information of the vehicle and basic information of the vehicle. The real-time condition information may include: vehicle speed, wheel speed, steering wheel angle signal, gear signal, engine torque, ambient temperature, shutdown time, and the like. The basic information may include: gear ratios of gearbox, rolling radius, wheelbase, ratio of turning angle, and the like.

In step 102, a calculated output torque is calculated based on the vehicle condition information.

In an embodiment of the present invention, on the basis of step 101, a calculated output torque of a friction clutch is calculated based on the acquired vehicle condition information, such as wheel speed, engine torque, gear signal and angle signal.

The embodiment of the present invention further includes step 103.

In step 103, a temperature of a friction plate of the vehicle is calculated based on the front wheel speed, the rear wheel speed and the calculated output torque.

In an embodiment of the present invention, the front wheel speed and the rear wheel speed mainly determine a front-rear shaft speed difference of the vehicle, and the front-rear shaft speed difference determines a pressing force and displacement of the friction plate in the friction clutch. A friction plate heat generation is mainly caused by friction. When the front-rear shaft speed difference is 0, a temperature of the friction plate is mainly caused by the heat generation when the friction plate stirs oil. By combining the calculated output torque with the front wheel speed and the rear wheel speed, the calculation of the temperature of the friction plate may be more comprehensively and more accurate.

In step 104, an actual output torque is obtained by correcting the calculated output torque based on the temperature of the friction plate.

In practical applications, a friction coefficient of the friction plate is affected by the temperature of the friction plate, where different temperatures correspond to different friction coefficients. The friction coefficient affects accuracy of the output torque. In the embodiment of the present invention, the calculated output torque is corrected based on the temperature of the friction plate. An actual output torque may be adjusted based on the temperature of the friction plate, so as to avoid excessive torque output when the temperature of the friction plate is high, thereby improving accuracy in controlling the actual output torque, reducing a probability of ablation of the friction plate, and improving the maneuverability of the vehicle and an ability of the vehicle to get out of trouble.

In step 105, a friction clutch of the vehicle is controlled to output the actual output torque.

In the embodiment of the present invention, on the basis of step 104, the torque control module in the electronic control unit obtains, based on the calculated actual output torque, a current required for the friction clutch; and controls, by using the current, the friction clutch to output the actual output torque. In this way, the probability of ablation damage to the friction plate is reduced while meeting actual needs of the vehicle.

In summary, the method for intelligent four-wheel drive control according to the embodiment of the present invention has at least the following advantages.

With the method for intelligent four-wheel drive control described in the embodiment of the present invention, a calculated output torque of a vehicle may be calculated based on acquired vehicle condition information of the vehicle; then a temperature of the friction plate of the vehicle may be calculated based on a front wheel speed, a rear wheel speed and the calculated output torque; and an actual output torque is obtained by correcting the calculated output torque based on the temperature of the friction plate, and a friction clutch of the vehicle is controlled to output the actual output torque. In the method for intelligent four-wheel drive control provided in the embodiments of the present invention, the temperature of the friction plate is directly obtained based on real-time vehicle condition information, and thereby has higher accuracy; in addition, the calculated output torque is corrected based on the temperature of the friction plate, which improves accuracy in controlling the output torque, thereby improving maneuverability of the vehicle and an ability of the vehicle to get out of trouble, and reducing probability of ablation damage to the friction plate.

### Embodiment 2

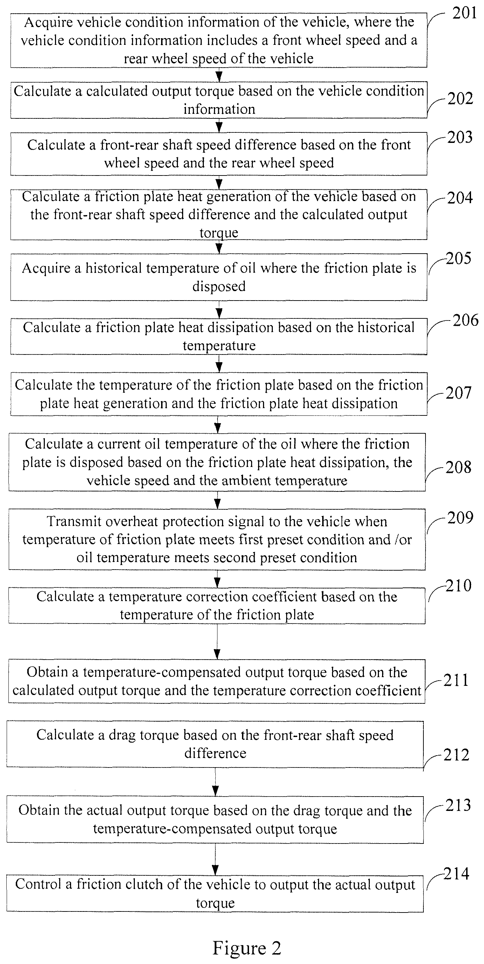

Figure 2 is a flow chart of a method for intelligent four-wheel drive control according to another embodiment of the present invention.

The method for intelligent four-wheel drive control provided in the embodiment of the present invention is applicable to a vehicle. The method may include steps 201 to 214.

In step 201, vehicle condition information of a vehicle is acquired, where the vehicle condition information includes a front wheel speed and a rear wheel speed of the vehicle.

For a specific implementation of step 201, reference may be made to step 101 in embodiment 1.

In step 202, a calculated output torque is calculated based on the vehicle condition information.

For a specific implementation of step 202, reference may be made to step 102 in embodiment 1.

In step 203, a front-rear shaft speed difference is calculated based on the front wheel speed and the rear wheel speed.

The front-rear shaft speed difference indicates a difference between an average value of the front wheel speed and an average value of the rear wheel speed. The front-rear shaft speed difference is not only a main factor for friction plate heat generation, but also a main parameter in calculating a drag torque. The drag torque is a part of the actual output torque. In the embodiment of the present invention, the front-rear shaft speed difference and the drag torque are introduced in order to improve accuracy in calculating the temperature of the friction plate and improve accuracy of the actual output torque.

In step 204, a friction plate heat generation of the vehicle is calculated based on the front-rear shaft speed difference and the calculated output torque.

In the embodiment of the present invention, the front-rear shaft speed difference and the calculated output torque are mainly used for calculating a work done by sliding friction on the friction plate. The work done by sliding friction is a main source of a temperature rise on the friction plate, and the friction plate heat generation may be calculated from the work done by sliding friction.

In step 205, a historical temperature of oil where the friction plate is disposed is acquired.

In the embodiment of the present invention, after the friction plate heat generation is calculated in step 204, a friction plate heat dissipation is further considered. In practical applications, heat on the friction plate is dissipated through the oil where the friction plate is disposed.

In step 206, a friction plate heat dissipation is calculated based on the historical temperature.

In the embodiment of the present invention, a real-time oil temperature is obtained based on the friction plate heat dissipation, and the friction plate heat dissipation is calculated by using the historical temperature of the oil.

In step 207, the temperature of the friction plate is calculated based on the friction plate heat generation and the friction plate heat dissipation.

In the embodiment of the present invention, a variation in the temperature of the friction plate may be calculated by subtracting the friction plate heat dissipation from the friction plate heat generation, and then integration may be performed on the variation to obtain the temperature of the friction plate.

In the method for calculating the temperature of the friction plate according to the embodiment of the present invention, an influence of the front-rear shaft speed difference on the temperature of the friction plate is considered, and accuracy in calculating the temperature of the friction plate is improved, which leads to lower cost, better real-time performance, and a lightweight characteristic, in comparison with an indirect calculation of the temperature of the friction plate through a temperature sensor.

In step 208, a current oil temperature of the oil where the friction plate is disposed is calculated based on the friction plate heat dissipation, the vehicle speed and the ambient temperature.

In the embodiment of the present invention, a current oil temperature of the oil where the friction plate is disposed may be calculated accurately based on the friction plate heat dissipation in combination with a vehicle speed and ambient temperature. The friction plate heat dissipation is a main heat source for the oil. In addition, the vehicle speed and ambient temperature have a certain influence on heat dissipation of the oil. With the method for calculating the current oil temperature according to the embodiment of the present invention, calculation is simplified and cost is reduced while ensuring accuracy in calculating the current oil temperature.

In step 209, an overheat protection signal is transmitted to the vehicle when the temperature of the friction plate meets a first preset condition and /or when the current oil temperature meets a second preset condition.

In the embodiment of the present invention, an overheat protection may be applied to the vehicle if the temperature of the friction plate is excessively high or the current oil temperature is excessively high, that is, when the temperature of the friction plate meets a first preset condition and /or when the current oil temperature meets a second preset condition. In this way, a driver may be reminded to decelerate the vehicle when the temperature of the friction plate is excessively high or the current oil temperature is excessively high, so as to reduce probability of ablation damage to the friction plate.

In an example, the first preset condition may be that the temperature of the friction plate is greater than 190°C, and the second preset condition may be that the current oil temperature is greater than 130°C. Either the temperature of the friction plate meeting the first preset condition or the current oil temperature meeting the second preset condition may trigger the overheat protection signal to the vehicle, reminding the driver that the four-wheel drive system is overheat and the vehicle should be decelerated. The transmission of the overheat protection signal is terminated when the temperature of the friction plate does not meet the first preset condition and the current oil temperature does not meet the second preset condition.

In a practical application, the overheat protection signal may be a piece of text information displayed on an instrument screen of the vehicle, or may be an overheat alert.

In the embodiment of the present invention, based on the temperature of the friction plate calculated in step 207, the method further includes step 210.

In step 210, a temperature correction coefficient is calculated based on the temperature of the friction plate.

In a practical application, there is a correspondence between a friction coefficient of the friction plate and the temperature of the friction plate. Calculating the temperature correction coefficient based on the temperature of the friction plate may improve accuracy in calculating the output torque. The temperature correction coefficient may be calibrated based on an actual vehicle condition, so as to improve accuracy of the temperature correction coefficient.

In step 211, a temperature-compensated output torque is obtained based on the calculated output torque and the temperature correction coefficient.

In a practical application, the temperature-compensated output torque may be obtained by multiplying the calculated output torque by the temperature correction coefficient. Compared to the calculated output torque, the temperature-compensated output torque considers the influence of the temperature of the friction plate on the actual output torque, so that accuracy in calculating the actual output torque is improved, and the cases of excessive or inadequate output torque for the vehicle may be avoided.

In step 212, a drag torque is calculated based on the front-rear shaft speed difference.

In a practical application, the actual output torque further includes a drag torque caused by the front-rear shaft speed difference. Taking the drag torque into account may further improve the accuracy in calculating the actual output torque and improve accuracy in controlling the vehicle.

In step 213, the actual output torque is obtained based on the drag torque and the temperature-compensated output torque.

Based on the above steps, the actual output torque with high accuracy may be obtained as a sum of the drag torque and the temperature-compensated output torque, which improves accuracy in controlling the output torque by the vehicle.

In step 214, a friction clutch of the vehicle is controlled to output the actual output torque.

In summary, the method for intelligent four-wheel drive control according to the embodiment of the present invention has at least the following advantages.

With the method for intelligent four-wheel drive control described in the embodiment of the present invention, a temperature of the friction plate and a drag torque may be calculated based on the front-rear shaft speed difference; a temperature-compensated output torque is obtained based on the temperature of the friction plate; an actual output torque is obtained based on the drag torque and the temperature-compensated output torque. In this way, the actual output torque is obtained by compensating the calculated output torque according to the temperature of the friction plate and then combining with the drag torque, and therefore control accuracy of the actual output torque is improved, providing maneuverability of the vehicle and an ability of the vehicle to get out of trouble. In addition, by transmitting an overheat protection signal to the vehicle, probability of ablation damage to the friction plate is reduced, and a service life of the friction clutch is increased.

It should be noted that, for purpose of description, the method embodiments are expressed as a series of actions. However, those skilled in the art should appreciate that the present invention is not limited to the described order of the actions, and according to the present invention, some steps may be performed in another sequence or performed simultaneously. In addition, those skilled in the art should also understand that embodiments described in the specification are preferred embodiments, and the described actions are not necessitated for the embodiments of the present invention.

### Embodiment 3

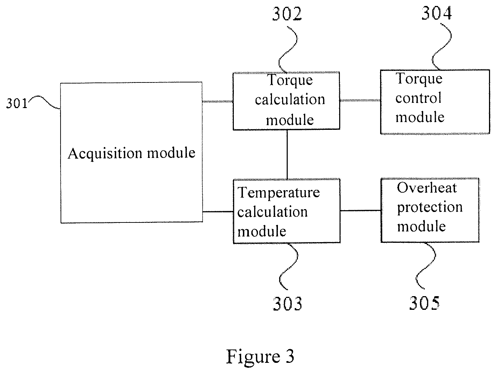

Figure 3 is a structural block diagram of a system for intelligent four-wheel drive control according to an embodiment of the present invention. As shown in Figure 3, the system for intelligent four-wheel drive control is mainly applied to a vehicle, and includes an acquisition module 301, a torque calculation module 302, a temperature calculation module 303 and a torque control module 304. The acquisition module 301 is connected to the torque calculation module 302 and the temperature calculation module 303. The torque calculation module 302 is connected to the temperature calculation module 303 and the torque control module 304.

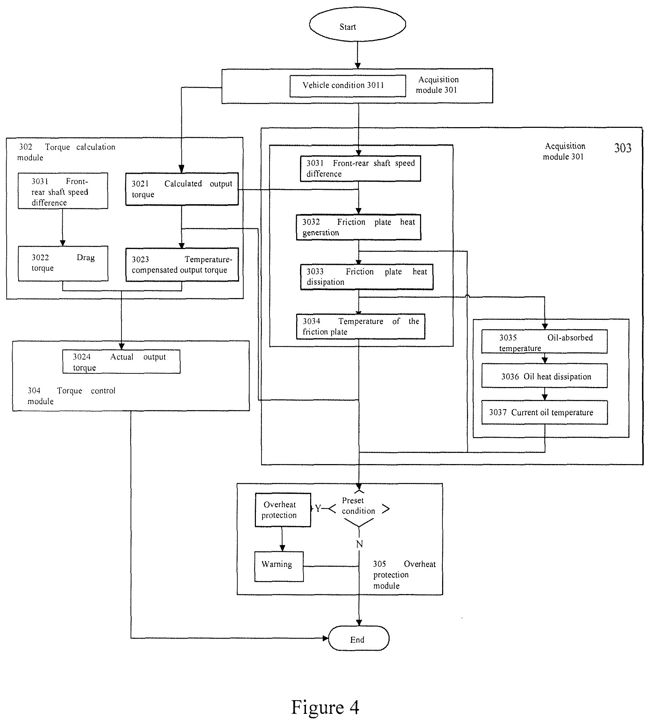

Figure 4 is a schematic diagram of a control process of a system for intelligent four-wheel drive control according to an embodiment of the present invention. As shown in Figure 4, the acquisition module 301 is configured to acquire vehicle condition information 3011 of a vehicle, where the vehicle condition information 3011 includes a front wheel speed and a rear wheel speed. In a practical application, the vehicle condition information 3011 further includes vehicle speed, steering wheel angle signal, gear signal, engine torque, ambient temperature, shutdown time, gear ratios of gearbox, rolling radius, wheelbase, ratio of turning angle, and the like.

The torque calculation module 302 is configured to calculate a calculated output torque 3021 based on the vehicle condition information 3011. In an example, the torque calculation module 302 may be configured to calculate the calculated output torque 3021 based on the wheel speed, engine torque, gear signal and angle signal, and the like, of the vehicle.

The temperature calculation module 303 is configured to calculate a temperature 3034 of the friction plate of the vehicle based on the front wheel speed, the rear wheel speed and the calculated output torque 3021.

In an example, the temperature calculation module 303 is configured to calculate a front-rear shaft speed difference 3031 based on the front wheel speed and the rear wheel speed, and calculate a friction plate heat generation 3032 of the vehicle based on the front-rear shaft speed difference 3031 and the calculated output torque 3021. In a practical application, the friction plate heat generation 3032 is related to not only the calculated output torque 3021, but also friction plate heat generation cause by the front-rear shaft speed difference 3031. In the embodiment of the present invention, the front-rear shaft speed difference 3031 is considered when calculating the friction plate heat generation 3032, so that accuracy in calculating the temperature 3034 of the friction plate is improved.

In the embodiment of the present invention, a friction plate heat dissipation 3033 is calculated based on the friction plate heat generation 3032. In an example, the temperature calculation module 303 is further configured to acquire a historical temperature of oil where the friction plate is disposed, calculate the friction plate heat dissipation 3033 based on the historical temperature, and calculate the temperature 3034 of the friction plate based on the friction plate heat generation 3032 and the friction plate heat dissipation 3033.

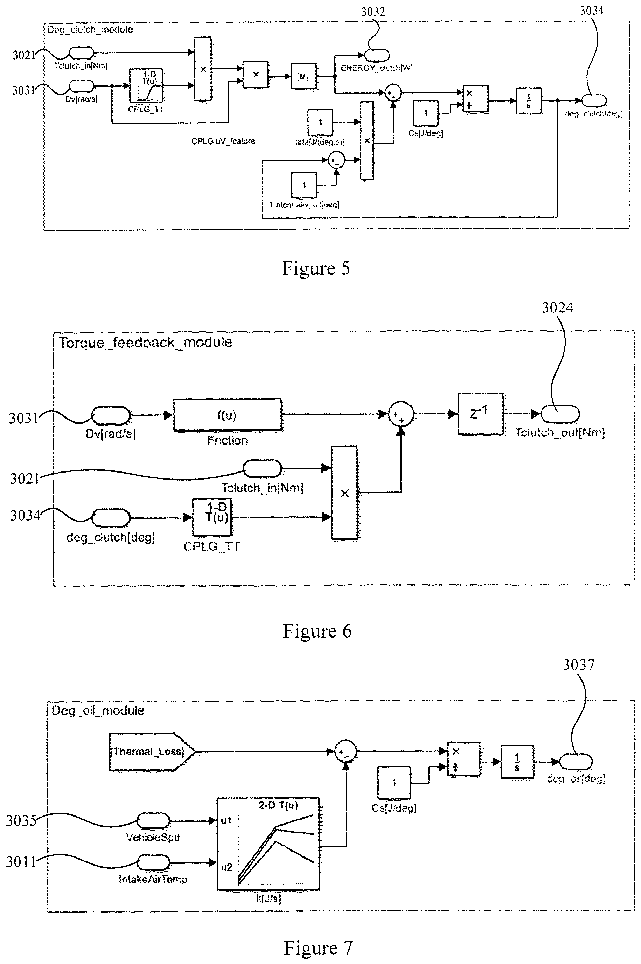

Figure 5 is a schematic diagram of a calculation model for calculating a temperature of the friction plate, included in the temperature calculation module, according to an embodiment of the present invention. As shown in Figure 5, the front-rear shaft speed difference 3031 and the calculated output torque 3021 are inputted. A correction coefficient is obtained based on the front-rear shaft speed difference 3031 through a functional calculation. For example, the correction coefficient is selected by applying the 1-D lookup table function in Matlab (known as a registered trademark for a software). The correction coefficient is multiplied by the calculated output torque 3021 to obtain a friction plate input torque that actually acts on the friction plate. The friction plate input torque is multiplied with the front-rear shaft speed difference 3031 to obtain a work done by sliding friction, which is a main source of the friction plate heat generation 3032. The friction plate heat dissipation 3033 is then subtracted from the work done by sliding friction to obtain a variation of the temperature 3034 of the friction plate. The temperature 3034 of the friction plate may be obtained by performing integration on the variation.

After the temperature 3034 of the friction plate is obtained, according to the embodiment of the present invention, the torque calculation module 302 is further configured to correct the calculated output torque 3021 according to the temperature 3034 of the friction plate to obtain an actual output torque 3024.

In an example, the torque calculation module 302 is further configured to: calculate a temperature correction coefficient based on the temperature 3034 of the friction plate; obtain a temperature-compensated output torque 3023 based on the calculated output torque 3021 and the temperature correction coefficient; calculate a drag torque 3022 based on the front-rear shaft speed difference 3031; and obtain the actual output torque 3024 based on the drag torque 3022 and the temperature-compensated output torque 3023.

In a practical application, Figure 6 is a schematic diagram of a calculation model in a torque calculation module according to an embodiment of the present invention. As shown in Figure 6, the torque calculation module 302 includes two portions: a correction on the output torque calculation value 3021 according to the temperature 3034 of the friction plate; and a calculation of the drag torque 3022 according to the front-rear shaft speed difference 3031. The temperature 3034 of the friction plate and the front-rear shaft speed difference 3031 are inputted into the torque calculation module 302. A temperature correction coefficient is obtained through a functional calculation on the temperature 3034 of the friction plate. For example, the temperature correction coefficient is selected by applying the 1-D lookup table function in Matlab (known as a registered trademark for a software). The temperature correction coefficient may be calibrated based on an actual condition of the vehicle, so as to improve accuracy of the temperature correction coefficient. The temperature-compensated output torque 3023 may be obtained by multiplying the calculated output torque 3021 by the temperature correction coefficient. A sum of the temperature-compensated output torque 3023 and the drag torque 3022 is taken as the actual output torque 3024.

In a practical application, the front-rear shaft speed difference 3031 needed for the torque calculation module 302 may be obtained by recalling the front-rear shaft speed difference 3031 calculated in the temperature calculation module 303, or may be calculated based on the front wheel speed and the rear wheel speed, which is not limited herein.

In the embodiment of the present invention, a Proportion-Integral-Differential (PID) feedback is established between the actual output torque 3024 and the calculated output torque 3021 to adjust magnitude of the input signal, so as to improve accuracy of the output torque of the system for intelligent four-wheel drive control, and improve maneuverability of the vehicle, an ability of the vehicle to get out of trouble, and a Noise-Vibration-Harshness (NVH ) performance.

In the embodiment of the present invention, the torque control module 304 is configured to control a friction clutch to output the actual output torque 3024, to meet an actual need of the vehicle. In an example, the torque control module 304 may be configured to: obtain, based on the calculated actual output torque 3024, a current required for the friction clutch; and control, by using the current, the friction clutch to output the actual output torque 3024. In this way, probability of ablation damage to the friction plate is reduced while meeting the actual needs of the vehicle.

In the embodiment of the present invention, based on that the temperature 3034 of the friction plate is obtained, the temperature calculation module 303 is further configured to calculate, based on the friction plate heat dissipation 3033, the vehicle speed and the ambient temperature, a current oil temperature 3037 of the oil where the friction plate is disposed.

In an example, the friction plate heat dissipation 3033 is used for calculating an oil-absorbed temperature 3035; and the vehicle speed and the ambient temperature are used for calculating an oil heat dissipation 3036. The current oil temperature 3037 is obtained by subtracting the oil heat dissipation 3036 from the oil-absorbed temperature 3035.

Figure 7 is a schematic diagram of a calculation model for calculating a current oil temperature, included in a temperature calculation module, according to an embodiment of the present invention. As shown in Figure 7, an input signal for the temperature calculation module 303 includes the oil-absorbed temperature 3035 and the vehicle condition information 3011. The vehicle condition information 3011 specifically includes vehicle speed and ambient temperature. A correspondence between the vehicle speed and ambient temperature and the oil heat dissipation 3036 is pre-stored in the temperature calculation module 303. For example, the oil heat dissipation 3036 corresponding to a present vehicle speed and ambient temperature may be obtained by applying a 2-D lookup table function in Matlab (known as a registered trademark for a software); then a difference between the oil-absorbed temperature 3035 and the oil heat dissipation 3036 is calculated; the difference is divided by a specific heat capacity of the oil to obtain a variation of oil temperature; and the current oil temperature 3037 is obtained by performing integration on the variation of the oil temperature.

In the embodiment of the present invention, the system for intelligent four-wheel drive control further includes an overheat protection module 305. The overheat protection module 305 is connected to the temperature calculation module 303. The overheat protection module 305 is configured to transmit an overheat protection signal to the vehicle when the temperature 3034 of the friction plate meets a first preset condition and /or when the current oil temperature 3037 meets a second preset condition.

Specific description of the first preset condition and the second preset condition is provided in detail in the second embodiment, and is not repeated herein.

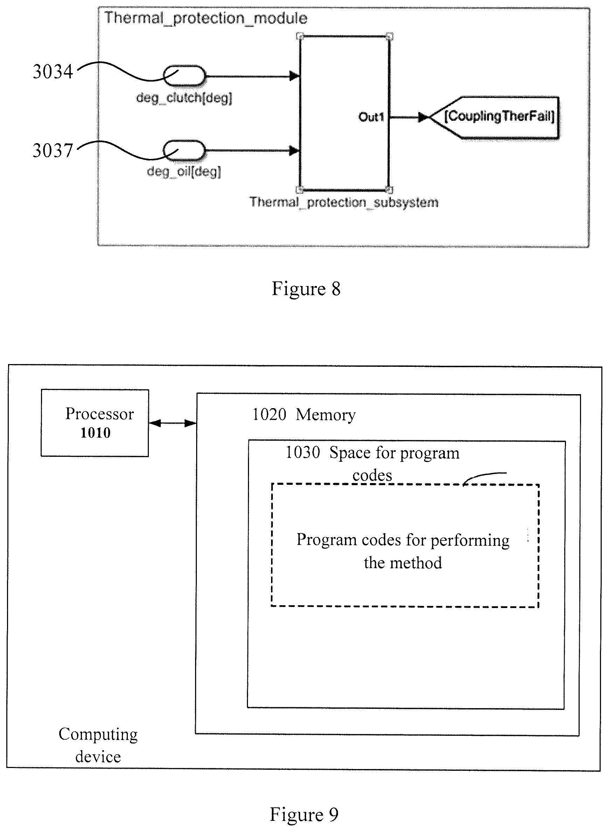

Figure 8 is a schematic diagram of a calculation model in an overheat protection module according to an embodiment of the present invention. As shown in Figure 8, an input signal for the overheat protection module 305 includes the temperature 3034 of the friction plate and the current oil temperature 3037. The temperature 3034 of the friction plate is compared with the first preset condition, and the current oil temperature 3037 is compared with the second preset condition. An overheat protection signal is transmitted to the vehicle when the temperature of the friction plate 3034 meets the first preset condition and /or when the current oil temperature 3037 meets the second preset condition. The vehicle enters an overheat protection mode and sends an overheat signal to the vehicle. An instrument in the vehicle receives and displays the overheat protection signal, or, an indicator light in the vehicle issues an overheat protection warning, in order to remind a driver to decelerate the vehicle. The intelligent four-wheel drive system automatically terminates the overheat protection mode in case that the temperature of the friction plate 3034 does not meet the first preset condition and the current oil temperature 3037 does not meet the second preset condition.

With the overheat protection module in the embodiment of the present invention, an automatic protection capability of the intelligent four-wheel drive system when overloaded is improved, which extends a service life of the friction clutch.

In practical applications, the acquisition module 301, the torque calculation module 302, the temperature calculation module 303, the torque control module 304 and the overheat protection module 305 are all integrated in an electronic control unit of the intelligent four-wheel drive system, and the multiple modules operate in parallel to improve calculation speed and reduce time consumed in calculation.

In summary, the system for intelligent four-wheel drive control according to the embodiment of the present invention has at least the following advantages.

With the system for intelligent four-wheel drive control described in the embodiment of the present invention, a calculated output torque of a vehicle may be calculated based on vehicle condition information of the vehicle; then a front-rear shaft speed difference is calculated based on a front wheel speed and a rear wheel speed; a temperature of the friction plate of the vehicle may be calculated based on the front-rear shaft speed difference and the calculated output torque; and an actual output torque is obtained by correcting the calculated output torque based on the temperature of the friction plate, and a friction clutch of the vehicle is controlled to output the actual output torque. In the system for intelligent four-wheel drive control provided in the embodiments of the present invention, the temperature of the friction plate is directly obtained based on real-time vehicle condition information, and thereby has higher accuracy; in addition, the calculated output torque is corrected according to the temperature of the friction plate, which improves accuracy in controlling the output torque, thereby improving maneuverability of the vehicle and an ability of the vehicle to get out of trouble, and reducing probability of ablation damage to the friction plate.

Device embodiments, which are similar to the method embodiments, are described briefly, and reference may be made to the description of the method embodiments.

A vehicle is further provided in the embodiments of the present invention. The vehicle includes the system for intelligent four-wheel drive control according to the embodiments. Specific structure and general principles of the system for intelligent four-wheel drive control are described in detail in the aforementioned embodiments, which are not repeated herein.

In the vehicle provided by the embodiment of the present invention, with the system for intelligent four-wheel drive control, a temperature of the friction plate may be directly obtained based on real-time vehicle condition information, and a calculated output torque may be corrected based on the temperature of the friction plate, so that accuracy in controlling the output torque is improved, and in turn maneuverability of the vehicle and an ability of the vehicle to get out of trouble are improved, and probability of ablation damage to the friction plate is reduced.

The device embodiments described above are merely illustrative. A unit described as a discrete component may be or may not be physically separated. Components shown as units may be or may not be physical units, that is, the components may be located in one place or may be distributed onto multiple networked units. All of or part of the units may be selected based on actual needs to implement the solutions according to the embodiments of the invention. Those skilled in the art may understand and practice the present invention without any creative effort.

Various component embodiments of the present invention may be implemented in hardware, or in software modules running on one or more processors, or in a combination thereof. Those skilled in the art should understand that a microprocessor or a digital signal processor (DSP) may be used in practice to implement some or all functions of some or all components in the computing device according to the embodiments of the present invention. The present invention may alternatively be implemented as a device or program (such as a computer program and computer program product) for performing part or all of the methods described herein. Such program for implementing the present invention may be stored on a computer-readable medium, or may be in a form of one or more signals. Such signals may be downloaded from Internet sites, or provided on carrier signals, or in any other form.

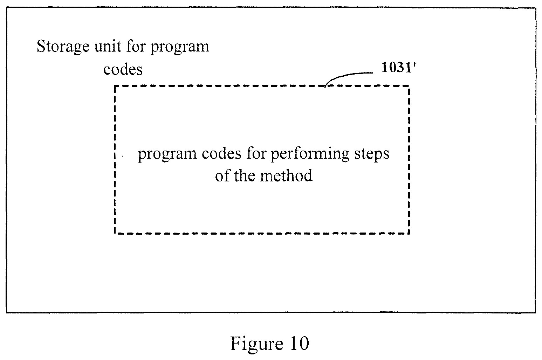

For example, Figure 9 shows a computing device configured to perform the method according to the present invention. The computing device traditionally includes a processor 1010 and a computer program product or computer readable medium in a form of a memory 1020. The memory 1020 may be an electronic memory such as flash memory, Electrically Erasable Programmable Read Only Memory (EEPROM), Electrically Programmable Read-Only-Memory (EPROM), hard disk, or Read-Only-Memory (ROM). The memory 1020 has storage space 1030 for storing program codes 1031 for performing any of the steps in the above method. For example, the storage space 1030 for storing the program codes may include various program codes 1031 for implementing various steps in the above methods. The program coded may be read from or written into one or more computer program products. The computer program product includes hard disk, compact disk (CD), memory card, floppy disk or other carriers for storing program codes. The computer program product is typically a portable storage unit or a fixed storage unit, as described with reference to Figure 10. The storage unit may have storage segments, storage spaces, and the like, arranged similarly to the memory 1020 in the computing device in Figure 9. The program codes may be compressed in a suitable form, for example. Typically, the storage unit includes computer readable codes 1031', readable by a processor such as the processor 1010, for example. The codes, when being executed by a computing device, cause the computing device to perform the steps of the method described above.

As used herein, terms of "an embodiment," "embodiments" or "one or more embodiments" indicate that a particular feature, structure, or characteristic described in connection with the embodiment is included in at least one embodiment of the present invention. In addition, it should be noted that instances of "in an embodiment" herein do not necessarily refer to a same embodiment.

Numerous specific details are set forth in the description provided herein. It should be understood, however, that embodiments of the present invention may be practiced without these specific details. In some instances, well-known methods, structures and techniques are not shown in detail in order to avoid obscuring understanding of the description.

In the claims, any reference signs placed in parentheses shall not be construed as limiting the claims. Word "comprising" does not exclude presence of elements or steps not listed in a claim. Word "a" or "an" preceding an element does not exclude presence of such elements. The present invention may be implemented by means of hardware including several different elements and by means of a suitably programmed computer. In a unit claim enumerating several means, some of the means may be embodied through a same hardware item. Use of words "first", "second", and "third", and the like do not indicate any sequence, and these words may be interpreted as names.

## Claims

1. A method for intelligent four-wheel drive control, comprising:
acquiring (101, 201) vehicle condition information of a vehicle, wherein the vehicle condition information comprises a front wheel speed of the vehicle and a rear wheel speed of the vehicle;
calculating (102, 202), based on the vehicle condition information, a calculated output torque;
calculating (103), based on the front wheel speed, the rear wheel speed and the calculated output torque, a temperature of a friction plate of the vehicle;
correcting (104) the calculated output torque according to the temperature of the friction plate, to obtain an actual output torque; and
controlling (105, 214) a friction clutch to output the actual output torque,
wherein the step of calculating (103), based on the front wheel speed, the rear wheel speed and the calculated output torque, a temperature of the friction plate of the vehicle comprises:
calculating (203) a front-rear shaft speed difference from the front wheel speed and the rear wheel speed; and
calculating the temperature of the friction plate of the vehicle based on the front-rear shaft speed difference and the calculated output torque,
**characterized in that**
the step of calculating the temperature of the friction plate of the vehicle based on the front-rear shaft speed difference and the calculated output torque comprises:
calculating (204) a friction plate heat generation of the vehicle based on the front-rear shaft speed difference and the calculated output torque;
acquiring (205) a historical temperature of oil where the friction plate is disposed;
calculating (206) a friction plate heat dissipation based on the historical temperature; and
calculating (207) the temperature of the friction plate based on the friction plate heat generation and the friction plate heat dissipation.

2. The method according to claim 1, wherein the vehicle condition information further comprises vehicle speed and ambient temperature, and after the step of calculating the temperature of the friction plate based on the friction plate heat generation and the friction plate heat dissipation, the method further comprises:
calculating (208) a current oil temperature of the oil where the friction plate is disposed based on the friction plate heat dissipation, the vehicle speed and the ambient temperature; and
transmitting (209) an overheat protection signal to the vehicle in case that the temperature of the friction plate meets a first preset condition and/or in case that the current oil temperature meets a second preset condition.

3. The method according to claim 1 or 2, wherein the step of correcting the calculated output torque according to the temperature of the friction plate to obtain an actual output torque comprises:
calculating (210) a temperature correction coefficient based on the temperature of the friction plate;
obtaining (211) a temperature-compensated output torque based on the calculated output torque and the temperature correction coefficient;
calculating (212) a drag torque based on the front-rear shaft speed difference; and
obtaining (213) the actual output torque based on the drag torque and the temperature-compensated output torque.

4. A system for intelligent four-wheel drive control, comprising an acquisition module (301), a torque calculation module (302), a temperature calculation module (303) and a torque control module (304), wherein
the acquisition module (301) is connected to the torque calculation module (302) and the temperature calculation module (303), and the torque calculation module (302) is connected to the temperature calculation module (303) and the torque control module (304);
the acquisition module (301) is configured to acquire vehicle condition information of a vehicle, wherein the vehicle condition information comprises a front wheel speed of the vehicle and a rear wheel speed of the vehicle;
the torque calculation module (302) is configured to calculate, based on the vehicle condition information, a calculated output torque;
the temperature calculation module (303) is configured to calculate, based on the front wheel speed, the rear wheel speed and the calculated output torque, a temperature of a friction plate of the vehicle;
the torque calculation module (302) is further configured to correct the calculated output torque according to the temperature of the friction plate to obtain an actual output torque; and
the torque control module (304) is configured to control a friction clutch to output the actual output torque,
wherein the temperature calculation module (303) is configured to calculate, based on the front wheel speed, the rear wheel speed and the calculated output torque, a temperature of a friction plate of the vehicle, **characterized in that**
the temperature calculation module (303) is further configured to:
calculate a front-rear shaft speed difference based on the front wheel speed and the rear wheel speed, and calculate a friction plate heat generation of the vehicle based on the front-rear shaft speed difference and the calculated output torque; and
acquire a historical temperature of oil where the friction plate is disposed, calculate a friction plate heat dissipation based on the historical temperature, and calculate the temperature of the friction plate based on the friction plate heat generation and the friction plate heat dissipation.

5. The system according to claim 4, wherein the vehicle condition information further comprises vehicle speed and ambient temperature, and the system further comprises an overheat protection module (305), wherein
the overheat protection module (305) is connected to the temperature calculation module (303);
the temperature calculation module (303) is further configured to calculate a current oil temperature of the oil where the friction plate is disposed based on the friction plate heat dissipation, the vehicle speed and the ambient temperature; and
the overheat protection module (305) is configured to transmit an overheat protection signal to the vehicle in case that the temperature of the friction plate meets a first preset condition and /or in case that the current oil temperature meets a second preset condition.

6. The system according to claim 5, wherein the torque calculation module (302) is further configured to correct the calculated output torque according to the temperature of the friction plate to obtain an actual output torque, wherein the torque calculation module (302) is further configured to:
calculate a temperature correction coefficient based on the temperature of the friction plate;
obtain a temperature-compensated output torque based on the calculated output torque and the temperature correction coefficient;
calculate a drag torque based on the front-rear shaft speed difference; and
obtain the actual output torque based on the drag torque and the temperature-compensated output torque.

7. A vehicle comprising the system for intelligent four-wheel drive control according to any one of claims 4 to 6, wherein the vehicle comprises front and rear wheels with their related shaft and a friction clutch therebetween.

8. A computer program comprising computer readable codes, wherein the computer readable codes, when being executed on a computing device, cause the computing device to perform the method for intelligent four-wheel drive control according to any one of claims 1 to 3.

9. A computer-readable medium storing the computer program according to claim 8.

## Patentansprüche

1. Verfahren zur intelligenten Allradsteuerung, aufweisend:
Erfassen (101, 201) von Fahrzeugzustandsinformationen eines Fahrzeugs, wobei die Fahrzeugzustandsinformationen eine Vorderradgeschwindigkeit des Fahrzeugs und eine Hinterradgeschwindigkeit des Fahrzeugs aufweisen;
Berechnen (102, 202) eines berechneten Ausgangsdrehmoments basierend auf den Fahrzeugzustandsinformationen;
Berechnen (103) einer Temperatur einer Reibplatte des Fahrzeugs basierend auf der Vorderradgeschwindigkeit, der Hinterradgeschwindigkeit und dem berechneten Ausgangsdrehmoment;
Korrigieren (104) des berechneten Ausgangsdrehmoments entsprechend der Temperatur der Reibplatte, um ein tatsächliches Ausgangsdrehmoment zu erhalten; und
Steuern (105, 214) einer Reibkupplung, um das tatsächliche Ausgangsdrehmoment auszugeben,
**dadurch gekennzeichnet, dass** der Schritt des Berechnens (103) einer Temperatur der Reibplatte des Fahrzeugs basierend auf der Vorderradgeschwindigkeit, der Hinterradgeschwindigkeit und dem berechneten Ausgangsdrehmoment umfasst:
Berechnen (203) einer Vorder-Hinterachsen-Drehzahldifferenz aus der Vorderradgeschwindigkeit und der Hinterradgeschwindigkeit; und
Berechnen der Temperatur der Reibplatte des Fahrzeugs basierend auf der Vorder-Hinterachsen-Drehzahldifferenz und dem berechneten Ausgangsmoment,
wobei der Schritt des Berechnens der Temperatur der Reibplatte des Fahrzeugs basierend auf der Vorder-Hinterachsen-Drehzahldifferenz und dem berechneten Ausgangsmoment umfasst:
Berechnen (204) einer Reibplattenwärmeerzeugung des Fahrzeugs basierend auf der Vorder-Hinterachsen-Drehzahldifferenz und dem berechneten Ausgangsmoment;
Erfassen (205) einer historischen Temperatur des Öls, in dem die Reibplatte angeordnet ist;
Berechnen (206) einer Reibplattenwärmeabgabe basierend auf der historischen Temperatur; und
Berechnen (207) der Temperatur der Reibplatte basierend auf der Reibplattenwärmeerzeugung und der Reibplattenwärmeabgabe.

2. Verfahren nach Anspruch 1, wobei die Fahrzeugzustandsinformation weiter die Fahrzeuggeschwindigkeit und die Umgebungstemperatur aufweist, und wobei das Verfahren nach dem Schritt des Berechnens der Temperatur der Reibplatte basierend auf der Reibplattenwärmeerzeugung und der Reibplattenwärmeabgabe weiter umfasst:
Berechnen (208) einer aktuellen Öltemperatur des Öls, in dem die Reibplatte angeordnet ist, basierend auf der Reibplattenwärmeabgabe, der Fahrzeuggeschwindigkeit und der Umgebungstemperatur; und
Senden (209) eines Überhitzungsschutzsignals an das Fahrzeug, falls die Temperatur der Reibplatte eine erste voreingestellte Bedingung erfüllt und/oder falls die aktuelle Öltemperatur eine zweite voreingestellte Bedingung erfüllt.

3. Verfahren nach Anspruch 1 oder 2, wobei der Schritt des Korrigierens des berechneten Ausgangsdrehmoments entsprechend der Temperatur der Reibplatte, um ein tatsächliches Ausgangsdrehmoment zu erhalten, umfasst:
Berechnen (210) eines Temperaturkorrekturkoeffizienten basierend auf der Temperatur der Reibplatte;
Erhalten (211) eines temperaturkompensierten Ausgangsdrehmoments basierend auf dem berechneten Ausgangsdrehmoment und dem Temperaturkorrekturkoeffizienten;
Berechnen (212) eines Schleppmoments basierend auf der Vorder-Hinterachsen-Drehzahldifferenz; und
Erhalten (213) des tatsächlichen Ausgangsdrehmoments basierend auf dem Schleppmoment und dem temperaturkompensierten Ausgangsdrehmoment.

4. System zur intelligenten Allradsteuerung, aufweisend ein Erfassungsmodul (301), ein Drehmomentberechnungsmodul (302), ein Temperaturberechnungsmodul (303) und ein Drehmomentsteuerungsmodul (304), wobei
das Erfassungsmodul (301) mit dem Drehmomentberechnungsmodul (302) und dem Temperaturberechnungsmodul (303) verbunden ist und das Drehmomentberechnungsmodul (302) mit dem Temperaturberechnungsmodul (303) und dem Drehmomentsteuerungsmodul (304) verbunden ist;
das Erfassungsmodul (301) konfiguriert ist, um Fahrzeugzustandsinformationen eines Fahrzeugs zu erfassen, wobei die Fahrzeugzustandsinformationen eine Vorderradgeschwindigkeit des Fahrzeugs und eine Hinterradgeschwindigkeit des Fahrzeugs aufweisen;
das Drehmomentberechnungsmodul (302) konfiguriert ist, basierend auf den Fahrzeugzustandsinformationen ein berechnetes Ausgangsdrehmoment zu berechnen;
das Temperaturberechnungsmodul (303) konfiguriert ist, basierend auf der Vorderradgeschwindigkeit, der Hinterradgeschwindigkeit und dem berechneten Ausgangsdrehmoment eine Temperatur einer Reibplatte des Fahrzeugs zu berechnen;
das Drehmomentberechnungsmodul (302) weiter konfiguriert ist, das berechnete Ausgangsdrehmoment entsprechend der Temperatur der Reibplatte zu korrigieren, um ein tatsächliches Ausgangsdrehmoment zu erhalten; und
das Drehmomentsteuerungsmodul (304) konfiguriert ist, eine Reibkupplung zu steuern, um das tatsächliche Ausgangsdrehmoment auszugeben,
**dadurch gekennzeichnet, dass** das Temperaturberechnungsmodul (303) konfiguriert ist, basierend auf der Vorderradgeschwindigkeit, der Hinterradgeschwindigkeit und dem berechneten Ausgangsdrehmoment eine Temperatur einer Reibplatte des Fahrzeugs zu berechnen, wobei das Temperaturberechnungsmodul (303) weiter konfiguriert ist,
eine Vorder-Hinterachsen-Drehzahldifferenz basierend auf der Vorderradgeschwindigkeit und der Hinterradgeschwindigkeit zu berechnen, und eine Reibplattenwärmeerzeugung des Fahrzeugs basierend auf der Vorder-Hinterachsen-Drehzahldifferenz und dem berechneten Ausgangsdrehmoment zu berechnen; und
eine historische Temperatur des Öls, in dem die Reibplatte angeordnet ist, zu erfassen, eine Reibplattenwärmeabgabe basierend auf der historischen Temperatur zu berechnen und die Temperatur der Reibplatte basierend auf der Reibplattenwärmeerzeugung und der Reibplattenwärmeabgabe zu berechnen.

5. System nach Anspruch 4, wobei die Fahrzeugzustandsinformationen weiter die Fahrzeuggeschwindigkeit und die Umgebungstemperatur aufweisen und das System weiter ein Überhitzungsschutzmodul (305) aufweist, wobei
das Überhitzungsschutzmodul (305) mit dem Temperaturberechnungsmodul (303) verbunden ist;
das Temperaturberechnungsmodul (303) weiter konfiguriert ist, eine aktuelle Öltemperatur des Öls, in dem die Reibplatte angeordnet ist, basierend auf der Reibplattenwärmeabgabe, der Fahrzeuggeschwindigkeit und der Umgebungstemperatur zu berechnen; und
das Überhitzungsschutzmodul (305) konfiguriert ist, ein Überhitzungsschutzsignal an das Fahrzeug zu senden, falls die Temperatur der Reibplatte eine erste voreingestellte Bedingung erfüllt und/oder falls die aktuelle Öltemperatur eine zweite voreingestellte Bedingung erfüllt.

6. System nach Anspruch 5, wobei das Drehmomentberechnungsmodul (302) weiter konfiguriert ist, das berechnete Ausgangsdrehmoment entsprechend der Temperatur der Reibplatte zu korrigieren, um ein tatsächliches Ausgangsdrehmoment zu erhalten, wobei das Drehmomentberechnungsmodul (302) weiter konfiguriert ist:
einen Temperaturkorrekturkoeffizienten basierend auf der Temperatur der Reibplatte zu berechnen;
ein temperaturkompensiertes Ausgangsdrehmoment basierend auf dem berechneten Ausgangsdrehmoment und dem Temperaturkorrekturkoeffizienten zu erhalten;
ein Schleppmoment basierend auf der vorderen und hinteren Drehzahldifferenz zu berechnen; und
das tatsächliche Ausgangsdrehmoment basierend auf dem Schleppmoment und dem temperaturkompensierten Ausgangsdrehmoment zu erhalten.

7. Fahrzeug, mit dem System zur intelligenten Allradantriebssteuerung gemäß einem der Ansprüche 4 bis 6, wobei das Fahrzeug Vorder- und Hinter-Räder mit ihrer zugehörigen Achse und einer Reibkupplung dazwischen aufweist.

8. Computerprogramm, das computerlesbare Codes aufweist, wobei die computerlesbaren Codes, wenn sie auf einer Recheneinrichtung ausgeführt werden, die Recheneinrichtung veranlassen, das Verfahren zur intelligenten Allradantriebssteuerung gemäß einem der Ansprüche 1 bis 3 auszuführen.

9. Computerlesbares Medium, das das Computerprogramm gemäß Anspruch 8 speichert.

## Revendications

1. Procédé pour la commande intelligente d'une transmission à quatre roues motrices, comprenant :
l'acquisition (101, 201) d'une information de condition de véhicule d'un véhicule, dans lequel l'information de condition de véhicule comprend une vitesse de roues avant du véhicule et une vitesse de roues arrière du véhicule ;
le calcul (102, 202), sur la base de l'information de condition de véhicule, d'un couple de sortie calculé ;
le calcul (103), sur la base de la vitesse de roues avant, de la vitesse de roues arrière et du couple de sortie calculé, d'une température d'une plaque de friction du véhicule ;
la correction (104) du couple de sortie calculé en fonction de la température de la plaque de friction, pour obtenir un couple de sortie réel ; et
la commande (105, 214) d'un embrayage à friction pour émettre en sortie le couple de sortie réel,
dans lequel l'étape de calcul (103), sur la base de la vitesse de roues avant, de la vitesse de roues arrière et du couple de sortie calculé, d'une température de la plaque de friction du véhicule comprend :
le calcul (203) d'une différence de vitesses d'arbres avant-arrière à partir de la vitesse de roues avant et de la vitesse de roues arrière ; et
le calcul de la température de la plaque de friction du véhicule sur la base de la différence de vitesses d'arbres avant-arrière et du couple de sortie calculé,
**caractérisé en ce que** :
l'étape de calcul de la température de la plaque de friction du véhicule sur la base de la différence de vitesses d'arbres avant-arrière et du couple de sortie calculé comprend :
le calcul (204) d'une génération de chaleur de plaque de friction du véhicule sur la base de la différence de vitesses d'arbres avant-arrière et du couple de sortie calculé ;
l'acquisition (205) d'une température historique de l'huile à l'endroit où la plaque de friction est disposée ;
le calcul (206) d'une dissipation de chaleur de plaque de friction sur la base de la température historique ; et
le calcul (207) de la température de la plaque de friction sur la base de la génération de chaleur de plaque de friction et de la dissipation de chaleur de plaque de friction.

2. Procédé selon la revendication 1, dans lequel l'information de condition de véhicule comprend en outre la vitesse de véhicule et la température ambiante afférente et, après l'étape de calcul de la température de la plaque de friction sur la base de la génération de chaleur de plaque de friction et de la dissipation de chaleur de plaque de friction, le procédé comprend en outre :
le calcul (208) d'une température d'huile courante de l'huile à l'endroit où la plaque de friction est disposée sur la base de la dissipation de chaleur de plaque de friction, de la vitesse de véhicule et de la température ambiante ; et
la transmission (209) d'un signal de protection contre la surchauffe au véhicule dans le cas où la température de la plaque de friction satisfait une première condition prédéfinie et/ou dans le cas où la température d'huile courante satisfait une seconde condition prédéfinie.

3. Procédé selon la revendication 1 ou 2, dans lequel l'étape de correction du couple de sortie calculé en fonction de la température de la plaque de friction pour obtenir un couple de sortie réel comprend :
le calcul (210) d'un coefficient de correction de température sur la base de la température de la plaque de friction ;
l'obtention (211) d'un couple de sortie compensé en température sur la base du couple de sortie calculé et du coefficient de correction de température ;
le calcul (212) d'un couple de traînée sur la base de la différence de vitesses d'arbres avant-arrière ; et
l'obtention (213) du couple de sortie réel sur la base du couple de traînée et du couple de sortie compensé en température.

4. Système pour la commande intelligente d'une transmission à quatre roues motrices, comprenant un module d'acquisition (301), un module de calcul de couple (302), un module de calcul de température (303) et un module de commande de couple (304), dans lequel :
le module d'acquisition (301) est connecté au module de calcul de couple (302) et au module de calcul de température (303), et le module de calcul de couple (302) est connecté au module de calcul de température (303) et au module de commande de couple (304) ;
le module d'acquisition (301) est configuré pour acquérir une information de condition de véhicule d'un véhicule, dans lequel l'information de condition de véhicule comprend une vitesse de roues avant du véhicule et une vitesse de roues arrière du véhicule ;
le module de calcul de couple (302) est configuré pour calculer, sur la base de l'information de condition de véhicule, un couple de sortie calculé ;
le module de calcul de température (303) est configuré pour calculer, sur la base de la vitesse de roues avant, de la vitesse de roues arrière et du couple de sortie calculé, une température d'une plaque de friction du véhicule ;
le module de calcul de couple (302) est en outre configuré pour corriger le couple de sortie calculé en fonction de la température de la plaque de friction pour obtenir un couple de sortie réel ; et
le module de commande de couple (304) est configuré pour commander un embrayage à friction pour émettre en sortie le couple de sortie réel,
dans lequel le module de calcul de température (303) est configuré pour calculer, sur la base de la vitesse de roues avant, de la vitesse de roues arrière et du couple de sortie calculé, une température d'une plaque de friction du véhicule,
**caractérisé en ce que** :
le module de calcul de température (303) est en outre configuré pour :
calculer une différence de vitesses d'arbres avant-arrière sur la base de la vitesse de roues avant et de la vitesse de roues arrière, et calculer une génération de chaleur de plaque de friction du véhicule sur la base de la différence de vitesses d'arbres avant-arrière et du couple de sortie calculé ; et
acquérir une température historique de l'huile à l'endroit où la plaque de friction est disposée, calculer une dissipation de chaleur de plaque de friction sur la base de la température historique et calculer la température de la plaque de friction sur la base de la génération de chaleur de plaque de friction et de la dissipation de chaleur de plaque de friction.

5. Système selon la revendication 4, dans lequel l'information de condition de véhicule comprend en outre la vitesse de véhicule et la température ambiante afférente, et le système comprend en outre un module de protection contre la surchauffe (305), dans lequel :
le module de protection contre la surchauffe (305) est connecté au module de calcul de température (303) ;
le module de calcul de température (303) est en outre configuré pour calculer une température d'huile courante de l'huile à l'endroit où la plaque de friction est disposée sur la base de la dissipation de chaleur de plaque de friction, de la vitesse de véhicule et de la température ambiante ; et
le module de protection contre la surchauffe (305) est configuré pour transmettre un signal de protection contre la surchauffe au véhicule dans le cas où la température de la plaque de friction satisfait une première condition prédéfinie et/ou dans le cas où la température d'huile courante satisfait une seconde condition prédéfinie.

6. Système selon la revendication 5, dans lequel le module de calcul de couple (302) est en outre configuré pour corriger le couple de sortie calculé en fonction de la température de la plaque de friction pour obtenir un couple de sortie réel, dans lequel le module de calcul de couple (302) est en outre configuré pour :
calculer un coefficient de correction de température sur la base de la température de la plaque de friction ;
obtenir un couple de sortie compensé en température sur la base du couple de sortie calculé et du coefficient de correction de température ;
calculer un couple de traînée sur la base de la différence de vitesses d'arbres avant-arrière ; et
obtenir le couple de sortie réel sur la base du couple de traînée et du couple de sortie compensé en température.

7. Véhicule comprenant le système pour la commande intelligente d'une transmission à quatre roues motrices selon l'une quelconque des revendications 4 à 6, dans lequel le véhicule comprend des roues avant et arrière avec leur arbre respectif et une plaque de friction entre.

8. Programme informatique comprenant des codes lisibles par ordinateur, dans lequel les codes lisibles par ordinateur, lorsqu'ils sont exécutés sur un dispositif informatique, forcent le dispositif informatique à réaliser le procédé pour la commande intelligente d'une transmission à quatre roues motrices selon l'une quelconque des revendications 1 à 3.

9. Support lisible par ordinateur stockant le programme informatique selon la revendication 8.
